# EUROPEAN PATENT APPLICATION

(11) **EP 1 463 317 A2**
(43) Date of publication of application: **29.09.2004**
(21) Application number: 04075814.6
(22) Date of filing: 15.03.2004
(51) Int. Cl.: H04N 7/16

(54) **Method for providing digital cinema content based upon audience metrics**

(30) Priority: 28.03.2003 US 402503
(71) Applicant: EASTMAN KODAK COMPANY, Rochester, New York 14650 (US)
(72) Inventor: McIntyre, Dale F., Eastman Kodak Company, Rochester, New York 14650-2201 (US); Patton, David L., Eastman Kodak Company, Rochester, New York 14650-2201 (US); Fredlund, John R., Eastman Kodak Company, Rochester, New York 14650-2201 (US); McCrackan, Michael E., Eastman Kodak Company, Rochester, New York 14650-2201 (US); Hume, Carlo V., Eastman Kodak Company, Rochester, New York 14650-2201 (US)
(74) Representative: Weber, Etienne Nicolas

(57) **Abstract**

A method for displaying a motion picture received as a digital data stream and having selectable scene content, by obtaining audience metrics, such as demographic data, and, based on these metrics, selecting replaceable image elements (202) from alternate frame (200) content or from selectable scenes (174a1, 174a2) to be inserted into the image display data stream (180), as purchased by an advertiser (260).

## Description

This invention generally relates to digital cinema and more particularly relates to a method and apparatus for providing variable digital cinema scene content, provided by advertisers, and optionally displayed based on demographic and related audience metrics.

In the conventional model for motion picture film production and distribution, the entertainment content of a motion picture is fixed, limited by the practical constraints of film-on-reel technology. Whatever is on the reel gets displayed to any and all audiences, regardless of audience makeup. Often, different versions of a movie are produced to provide, for example, versions having different standardized ratings due to variable content (such as R for Restricted or PG for Parental Guidance advised). However, this type of versioning is strictly fixed; there is no opportunity for adapting film content to suit the audience if an alternate version would be more appropriate.

Demographic metrics have been used as a basis for targeting entertainment, advertising, and promotional material to an audience group. Among numerous examples, U.S. Patent No. 5,758,257 (Herz et al.) discloses a method for using customer profile data to tailor the material made available to customers of cable television; U.S. Patent Application Publication 2002/0156677 A1 (Peters et al.) discloses a method and system for providing targeted advertising in public places, based on demographic and preference information obtained from digital devices such as Personal Digital Assistants (PDAs) carried by individuals; U.S. Patent No. 5,155,591 (Wachob) discloses providing demographically targeted commercial advertisements to television viewers, based on demographic and preference profile data for each viewer site; and U.S. Patent No. 6,128,663 (Thomas) discloses a method for providing targeted Internet content to a requestor based on demographic and preference information.

Demographic metrics have also been used by motion picture producers and distributors to obtain raw feedback data on overall audience appeal and on the relative degree of commercial success or failure of a motion picture. Thus far, however, demographic audience data has not been employed for adapting motion picture content to a particular audience, nor has other commercially available demographic data been used for attracting an audience for a feature presentation at particular viewing locations.

With the advent of digital cinema, considerable attention has been directed to potential technical advantages that allow more flexible display arrangements as well as opportunity for color enhancement and other imaging improvements. In addition to these technical and performance advantages, there also appear to be considerable advantages and opportunities for more economical motion picture distribution, for improved adaptation to markets and viewer demographics, for local customization of some types of content, and for an overall development of a more engrossing theater experience. Along with these advantages come enhanced opportunities for revenue enhancement both for studios that produce and distribute motion picture content and for theaters that show this content to audiences.

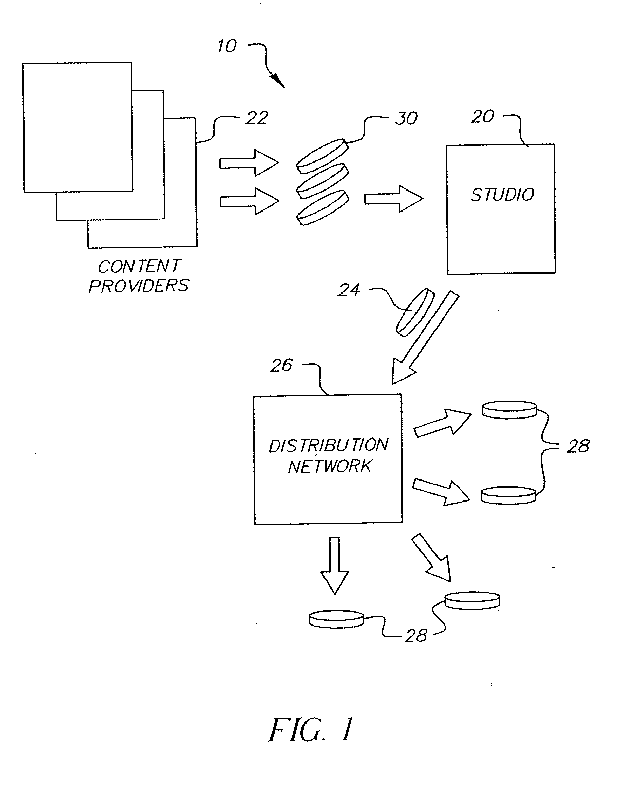

The conventional model for motion picture film distribution is characterized by rigid control of the entire distribution and display process, allowing minimal or no flexibility for local adaptation. Referring to Fig. 1, there is shown a block diagram of a conventional motion picture film distribution system 10. A production studio 20 takes the content from content providers 22 who generate the film feature, advertising, trailers, previews, and other content for theater display, typically as separate content films 30. Studio 20 edits, masters, and prepares print films 24 and provides them, through a distribution network 26 to theaters 28. In the conventional model of Fig. 1, studio 20 dictates what is viewed at each theater 28. This control of what gets shown not only relates to the film feature itself, but to any advertising or trailers, such as previews for future offerings, and the like. In the conventional arrangement, theaters 28 follow the instructions of studio 20 for display of the film feature and other related content. Often, in fact, the operator/owner of theater 28 is required to splice trailers, including advertising and other content, with the main film feature, so that the film is shown according to specific requirements of studio 20. With the relatively inflexible arrangement shown in Fig. 1, then, there is no opportunity for dynamically adding or changing image content.

A significant source of income for studio 20 comes from advertising and promotional sources. Advertisers pay large sums for product placement, in order to have their products appear in a motion picture. For example, automobile manufacturers pay a premium to have their cars used as part of the set. Similarly, soft drink manufacturers pay to have their labels, vending machines, or billboard advertisements shown in the background or to have an actor wear a T-shirt with their corporate logo. With conventional, film-based print preparation and distribution methods, any revenue for this "hidden" advertising goes to studio 20. Theater 28 does not participate in the benefits of this advertising revenue. Of course, for some types of nationally and internationally advertised products, advertisers benefit by film distribution nationwide and around the world. However, there are often scenes filmed that picture advertising or promotional content for local merchandisers, where products or services are only regionally known. For example, the scene background may picture a grocery outlet, appliance store, pay phone, filling station, or merchandise outlet that has only regional presence. With such content, potential revenues from resale of this promotional space cannot be tapped using the conventional film-based printing and distribution methods of Fig. 1.

In summary, it can be seen that, with conventional film-based printing and distribution methods as illustrated in Fig. 1, only studio 20 controls the content of print films 24 distributed to theaters 28. There is no opportunity to theater 28 for shared promotional revenues. In a similar vein, there is no opportunity with conventional film-based print and distribution methods for adding other types of local content, including content that is not exclusively of an advertising or promotional nature. For example, there may be entertainment value in including members of the viewing audience in the displayed motion picture itself, enhancing the overall entertainment experience. As just one example, a crowd scene in the motion picture may allow additional images that could be added using members of the audience. This capability could be used to heighten audience interest and response to a movie.

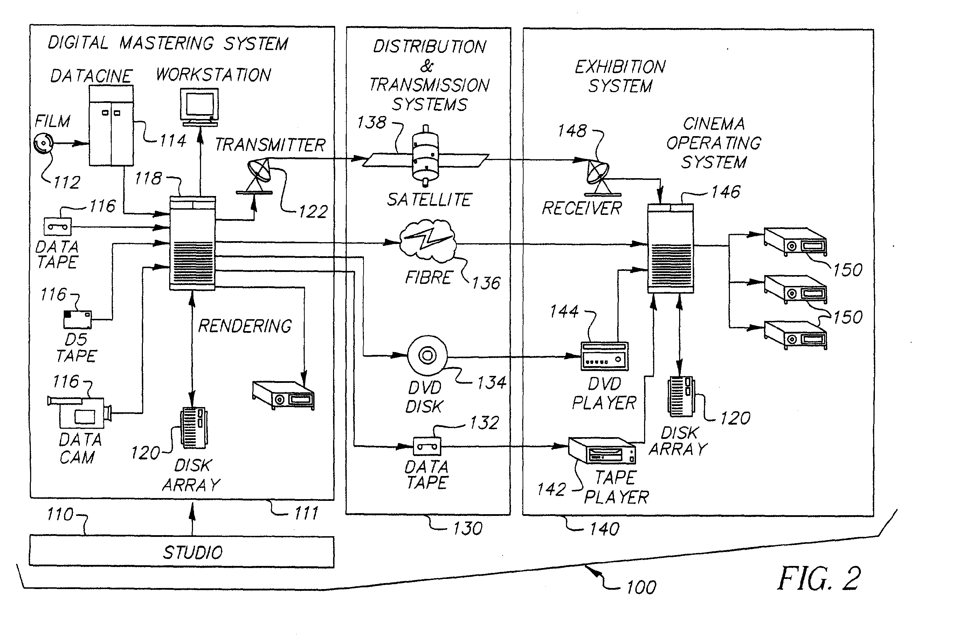

One of the potential benefits of digital cinema relates to how images are stored and displayed from data. Referring to Fig. 2, there is shown a block diagram of a digital cinema preparation and distribution system 100 for providing motion picture images from a studio 110 to a post production facility 111, which digitizes the motion picture images and provides the digitized images over a transmission system 130 to an exhibition system 140, typically a movie theater. (The post production facility 111 may be under the control of the studio 111, or it may exist (as it typically would) as a separate entity in the overall system 100.) At post production facility 111, digital mastering is performed on film 112 that contains image content, such as the film feature, advertising, trailers, and the like. A datacine system 114 transforms the film content into digital image content and provides the digital image content to a rendering system 118, typically supported by a disk array 120, that renders the motion picture image data in a resolution suitable for distribution and display. Rendering system 118 may also accept input from auxiliary input devices 116 such as data tape, DS tape, and DataCam devices. The fully mastered digital cinema output then is provided as a data stream to transmission system 130, which may utilize a satellite 138 in communication with a transmitter 122 connected to post production facility 111 equipment. Other alternative transmission media include a fiber cable connection 136, or transmission using an optical medium 134, such as DVD or optical disks, or using a magnetic medium 132, such as data tape. At exhibition system 140, the mastered digital image data is received, such as at a receiver 148, an optical media reader 144, a magnetic media reader 142 or over a data or fiber optic cable connection 136. A cinema operating system 146, typically supported by disk array 120, accepts the digital input data, processes the input data stream for presentation, and provides this data for image forming and projection by one or more digital projectors 150.

A number of methods have been developed for superposition of images in digital image processing. For example, U.S. Patent No. 6,243,104 (Murray) discloses superposition techniques for use in delivery of graphical content as a digital data stream provided over the Internet. U.S. Patents No. 6,069,637 (Gaglione et al.) and 6,362,816 (Kawanami et al.) disclose techniques for combining images of different types, including images that may have different resolutions. In television broadcasting, two-dimensional blue-screen methods have been widely used to allow superposition of one moving image onto another. Weather broadcasts are the best-known example where these methods are employed. The meteorologist appears to be in front of a dynamically changing map; in reality, the meteorologist is standing in front of a blue screen; the weather map is recorded using a separate camera and superimposed over the unblocked blue pixels.

More advanced three-dimensional methods and techniques have been developed and used for placing advertising and promotional content within the video data stream for television viewing. Familiar examples can be found in background advertising for a televised sports event. In baseball, for example, a televised view from the pitcher's mound shows an advertising billboard behind the batter. This billboard is added in the broadcast studio; in reality, the pitcher sees only a dark wall behind the batter, since a bright white billboard would distract the pitcher. Sophisticated techniques for integrating this type of advertising material have been developed so that electronically added advertising has a natural appearance to the TV viewer, with correct perspective and suitable brightness, color tone, and other attributes. For example, U.S. Patent No. 5,264,933 (Rosser et al.) discloses inserted logos in a televised video sequence. U.S. Patent No. 5,353,392 (Luquet et al.) discloses methods for identifying a target area within successive video frames for replacement with advertising or other material, including methods for accommodating changes in camera focal distance and in elevation and bearing angles as well as methods for allowing objects to obstruct part of the target area. U.S. Patent No. 6,381,362 (Deshpande et al.) discloses methods for providing virtual alternative display regions in video presentation for insertion of advertising. U.S. Patent No. 5,731,846 (Kreitman et al.) discloses methods for image transformation for combining video images. U.S. Patent No. 6,184,937 (Williams et al.) discloses methods for image insertion with audio enhancement.

U.S. Patent Application Publication US 2002/0100042 A1 (Khoo et al.) discloses a method and system for product placement and advertisement display in a digital data stream that is broadcast for an individual television viewer. In the scheme described in the 2002/0100042 disclosure, a broadcast studio has the capability to substitute an embedded advertisement into a broadcast motion picture based on individual demographic data obtained about an individual viewer. To provide the alternate image content, an image processing apparatus identifies a region that can be edited and imposes a scaled advertisement image into that region, typically substituting one product for another, based on individual viewer demographic data. The operations described in the 2002/0100042 disclosure are thus performed at the studio, allowing either the creation of a plurality of different motion picture presentations, each presentation targeting a specific viewer demographic profile, or the creation of each personalized motion picture presentation "on the fly", based on demographic metrics. While the method of the 2002/0100042 disclosure could be used to provide alternate advertising content, however, there are drawbacks that limit the usability and potential effectiveness of this feature. One disadvantage relates to the level of control practiced by the broadcast studio when using this method; there is no option for local or regional modification to take advantage of replaceable scene content for advertising use. Moreover, with the capability for scene content substitution performed only at the studio, the method of the 2002/0100042 disclosure does not provide metrics upon which an advertiser could adequately assess the value of the alternate scene content. For example, a brief glimpse of a billboard during a chase scene would probably have less value to an advertiser than having a product display appear in the background during a scene that consists solely of dialog. Yet another shortcoming of the method described in the 2002/0100042 disclosure relates to scene visual characteristics, that is, to the overall "look and feel" of the scene. Any alternate scene content must be conditioned to suit numerous visual characteristics of the scene such as camera viewing angle, brightness, and point of focus, for example. Alternate scene content can be either in the background or foreground of a scene and may not look realistic if provided under ideal focus conditions. Thus, characterized by tight control of content, by limited availability of information about the replaceable content for advertisers and for those who integrate the alternate content into the scene itself, and by limited flexibility for use outside the studio environment, the solution offered in the 2002/0100042 disclosure would not be well suited for allowing the insertion of alternate scene content on a local or regional level, or for allowing alternate scene content to be aesthetically suited to visual characteristics of a scene.

Thus, although the technical tools exist for altering motion picture images to add content to portions of successive image frames according to audience demographics, image manipulation of this type is currently performed at an originating television studio or broadcast facility only. No means are provided for local modification of the motion picture image using these techniques; as a result, theaters cannot take advantage of promotional opportunities from local and regional advertising by inserting image content. Advertisers can obtain only limited information in order to assess the potential effectiveness of replaceable scene content. Theaters are also unable to add types of content other than advertising for enhancing enjoyment of the moviegoers' experience, such as adding images of audience members, for example.

In addition to advertising and promotional content within a film, there can also be promotional "trailers" that include advertising and are displayed in the interval between showings. In the conventional film-based model, these trailers are spliced, at the theater, with the motion picture film, under instructions provided from the studio or distributor. Other image content used in the motion picture environment includes slide show advertisements that are displayed between showings. In conventional practice, the same advertising or promotional presentation appears whenever the film is shown, regardless of audience demographics. It can be appreciated that there would be value in being able to change the trailer or slide show material to suit the makeup of the viewing audience.

In the conventional motion picture environment, some promotional and advertising revenues are obtained by the studio for display of products or corporate symbols within a movie or for advertising trailers displayed between showings. However, there is no option for profit to the local exhibitor of the film; the displayed content, including any profit from product placement or other advertisement, is controlled by the studio and distributors. In television broadcasting, by contrast, specific advertising time slots are allotted for local station sale of commercials. However, the motion picture presentation is not interrupted for commercials and there is currently no option for local participation in any promotional revenues for film content or trailers.

It is widely acknowledged that advertising is most effective when it is closely targeted according to a desired demographic profile. Even the same product is often presented differently when advertised to a different viewing audience. Thus, for example, the very same breakfast cereal may be touted as healthful, full of fiber, low in fat, and nutritious to an audience who attend to such things, and as fun, colorful, sugary, and delightfully crunchy to the rest of us. In television advertising, demographic profiles of the viewing audience are inferred from assumptions about the content of the related show and about the validity of statistical data obtained from viewer surveys. These demographic projections, probable to within varying degrees, are then used to direct the scheduling and purchase of advertising time slots for a profiled mass viewing audience. In a theater setting, however, with a live audience in their seats, demographic data can be much more reliable. The same motion picture can be shown to groups having very different demographics, depending on time of day and other factors. For advertisers, the capability to target their commercial messages to such an easily profiled audience can have significant value, particularly since the motion picture viewing audience does not typically have the same distraction levels that advertisers face with the home audience.

Thus it can be seen that there can be benefits to theater operators in having the capability to add and alter specific content of a motion picture, and related displayed content, for advertising, promotional, and entertainment enhancement, particularly where this modification is based on demographic information obtained from the viewing audience. Local use of available space for promotional content, based on audience metrics, can help movie exhibitors to take advantage of advertising revenues in ways not available using conventional film-based display technologies.

The present invention is directed to overcoming one or more of the problems set forth above. Briefly summarized, according to one aspect of the present invention, the invention resides in a method for displaying a motion picture received as a digital data stream having a plurality of original scene sequences and further having selectable scene content in one or more of the original scene sequences. The method comprises the steps of: (a) obtaining data about an audience for a plurality of audience members at a showing of the motion picture; (b) receiving digital image data for an alternate sequence of scene content for one of the original scene sequences in the motion picture; (c) dependent upon said data about said audience, substituting said alternate sequence of scene content into the digital data stream for said one of the original scene sequences at said showing, thereby altering selectable scene content for display according to said data about said audience; and (d) obtaining a fee for displaying said alternate sequence of scene content.

According to another aspect of the present invention, the invention resides in a method for integrating promotional content for an advertiser into a digital motion picture presentation for display to an audience. The method according to this aspect comprises the steps of: (a) receiving a motion picture digital data stream comprising at least one alterable scene sequence, a first alternate sequence of scene content, and a second alternate sequence of scene content, wherein either said first or said second alternate sequence of scene content is inserted into said motion picture digital data stream as part of said alterable scene sequence; (b) obtaining data about the audience at a showing of the digital motion picture; (c) obtaining, from the advertiser, a fee for displaying, within said at least one alterable scene sequence, either said first alternate sequence of scene content or said second alternate sequence of scene content; and (d) inserting either said first alternate sequence of scene content or said second alternate sequence of scene content into said motion picture digital data stream within said at least one alterable scene sequence, the selection of either said first or second alternate sequence of scene content based on said data obtained about the audience.

According to yet another aspect of the present invention, the invention resides in a method for integrating promotional content for an advertiser into a digital motion picture for display to an audience. The method according to this aspect comprises the steps of: (a) identifying at least one alterable promotional scene sequence within the digital motion picture data stream; (b) obtaining a fee from the advertiser to purchase said at least one alterable promotional scene sequence for display at a showing of the digital motion picture; (c) receiving the motion picture digital data stream comprising said at least one alterable promotional scene sequence and comprising at least one alternate sequence of scene content; (d) obtaining data about the audience at a showing of the digital motion picture; and (e) inserting said at least one alternate sequence of scene content into said motion picture digital data stream for display, based on said data about the audience.

A feature of the present invention is the opportunity to alter scene content within a specific scene of a digital motion picture presentation, for one or more showings.

It is an advantage of the present invention that it allows a degree of adaptation of promotional material within a motion picture presentation to the demographics and preferences of a viewing audience.

It is an advantage of the present invention that it allows a theater owner to profit from promotional opportunities for image content in displaying a motion picture film. Previously, only the studio controlled the use of and received payment for promotional content. In addition to image content, associated audio content can also be provided to accompany inserted image content.

It is a further advantage of the present invention that it allows a local theater owner or other exhibitor to dynamically add images of people to selected portions of a displayed feature film, thereby providing increased enjoyment and participation for some types of audiences, and providing opportunities for local advertisers to present their message.

These and other objects, features, and advantages of the present invention will become apparent to those skilled in the art upon a reading of the following detailed description when taken in conjunction with the drawings wherein there is shown and described an illustrative embodiment of the invention.
Figure 1 is a schematic block diagram showing a conventional system for motion picture film preparation and distribution.
Figure 2 is a schematic block diagram showing a system for mastering and providing digital motion picture data, such as could be used for implementing the present invention.
Figures 3a-3d show a sequential progression for identifying a variable content display area, for isolating that area, for providing alternate content for insertion into that area, and for inserting alternate content based on metadata associated with the digital motion picture image data stream.
Figure 4 is a schematic diagram showing the relationship of key components used for providing alternate content in a digital motion picture using chroma keying techniques.
Figure 5 is a schematic diagram showing one arrangement for obtaining demographic data about the audience.
Figure 6 is a schematic diagram showing how an image data stream for a digital motion picture can be constructed from alternate scene sequences.
Figure 7 is a flow sequence diagram showing the transactional steps used to obtain alternate content in a preferred embodiment.
Figure 8 is a flow sequence diagram showing transactional steps used for obtaining and using alternate content provided by an advertiser.
Figure 9 is a flow sequence diagram showing transactional steps used for obtaining and using alternate content provided by a studio.
Figure 10 is a flow sequence diagram showing transaction flow for obtaining and using alternative audio content.

The present description is directed in particular to elements forming part of, or cooperating more directly with, apparatus in accordance with the invention. It is to be understood that elements not specifically shown or described may take various forms well known to those skilled in the art.

While the preferred embodiment of the present invention is directed primarily to the use of demographic factors, such as age and gender, other types of audience metrics could be used to influence scene content within the motion picture. Related audience metrics could include, for example, attendance numbers, measured or perceived behavioral response, noise levels, information on reported or perceived likes and dislikes, or purchasing behavior, such as for soda, popcorn, and other items. Even anticipated traffic patterns due to scheduling of the showing or timing of simultaneous showings, and other factors could be considered broadly as types of audience metrics used to influence motion picture content as described subsequently.

### Obtaining Audience Metrics

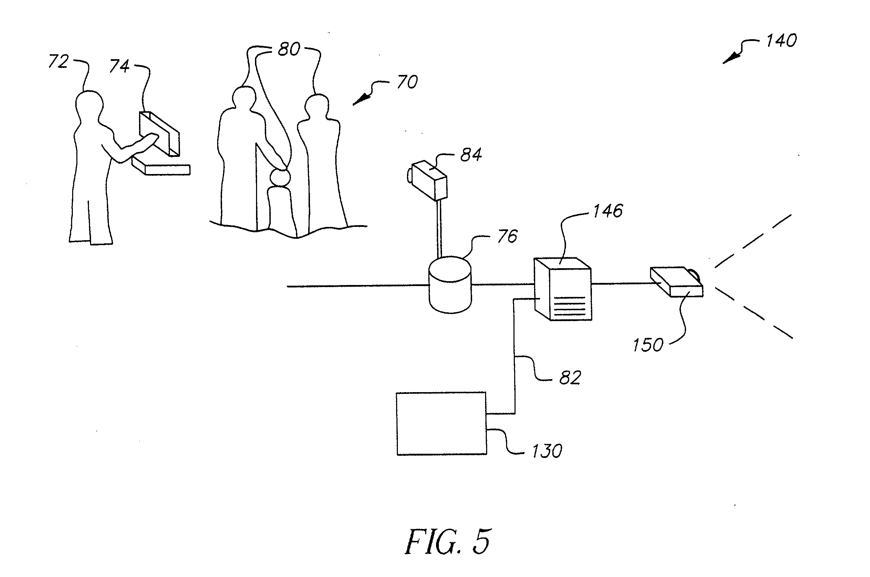

Demographic and other related data about the viewing audience can be obtained in a number of ways. Referring to Fig. 5, there are shown components of exhibition system 140 configured to collect and respond to demographic and attendance data about audience members 80. At a demographic data entry point 70, an employee 72 enters information about audience members 80 into a console 74, such as when tickets are sold or surrendered for admission. A database 76 stores the audience metrics data and makes it available to cinema operating system 146, which also receives digital cinema data 82 from transmission system 130, as was described in the background section above. Based on demographic data and other audience metrics, cinema operating system 146 adapts the digital cinema content for display by projector 150.

Demographic data typically includes information on age and gender of audience members 80 and can include additional information. There are a number of alternative methods that could be used for obtaining demographic data. Theater employee 72 could gather and report this data, using manual or automated methods. An electronic camera 84 could be employed along with pattern recognition software, obtaining information on each audience member 80 upon entry or when seated, for example. Audience members 80 themselves could be asked to enter demographic or preference information on a portable terminal, such as at the time of ticket sale, at the entry point, or when seated, for example.

Regardless of how the audience demographic or other audience metrics data is obtained, this data can be used as a basis for selecting and adapting an alternate sequence of scene content. The adapted sequence of scene content can be image content within frames or can be complete frame sequences, as described subsequently.

### Modifying Partial Scene Content within Frames

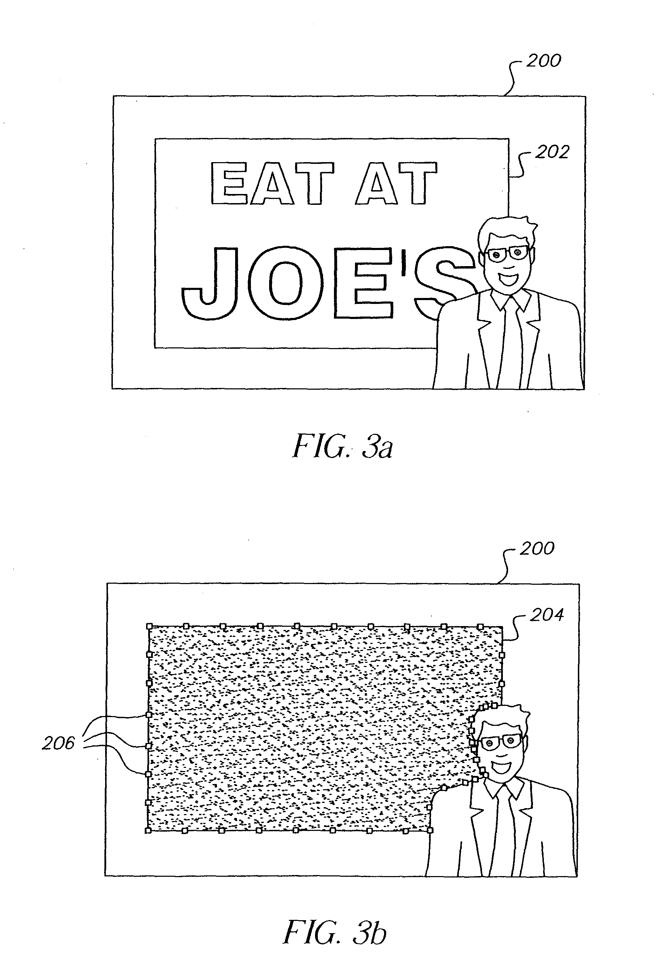

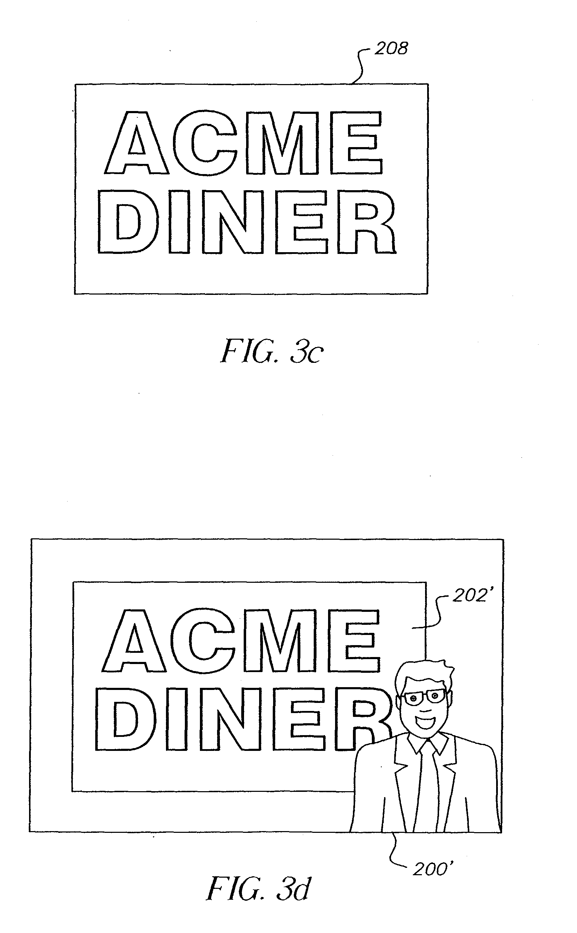

Referring to Figs. 3a, 3b, 3c, and 3d, there is shown an example sequence that illustrates, for a single image frame 200, how the present invention operates to define and manipulate a variable content display area 204 based on audience metrics. In a series of movie image frames 200, this sequence begins with the originally filmed scene of Fig. 3a, in which there is a replaceable image element 202. In a preferred embodiment, replaceable image element 202 comprises some form of advertisement, for example, such as a billboard, a placard on a bus or other vehicle, a sign in or above a store window, a phone booth logo, or some other identifiable element that appears in the background scene content. As is shown in Fig. 3b, variable content display area 204 has a shape and dimensions defined by a plurality of vertices 206 that provide bounding coordinates. Given information that includes the shape, dimensions, and placement of variable content display area 204, alternate content 208 can be prepared, as in the example of Fig. 3c. Alternate content 208 is then adapted to the shape and other characteristics of variable content display area 204 to provide alternate replaceable image content 202' in modified image frame 200'.

The capability for substituting alternate replaceable image content 202' as shown in Fig. 3d relates to the nature of digital imaging, by which image frame 200 is represented as a two-dimensional matrix of pixels, as is well known to those skilled in the digital imaging arts. Each pixel has one or more corresponding data values that determine how that pixel is displayed. Referring again to Fig. 2, for projection of the modified image frame 200 of Fig. 3d, the digital pixel data for alternate replaceable image content 202' is inserted into the digital data stream that goes to digital projectors 150. Note that pixels in frame 200 that lie on or near the border of variable content display area 204 may be conditioned in some way to improve the visual transition between content originally filmed and alternate content 208. Such conditioning could be performed by blurring, for example, or by feathering, as applied to the transition between the originally filmed pixels and the pixels containing the alternate content. Preferably, although not necessarily, this would be done by modifying pixels adjacent to, but not within, the variable content display area.

### Metadata for Variable Content Display Area 204

Referring back jointly to Fig. 2 and to the sequence of Figs. 3a-3d, the present invention provides a method for modifying, at exhibition system 140, image frames 200 that originate as digital data transmitted from post production facility 111.

In order to allow modification of image frames 200, studio 110 must provide sufficient metadata along with the digital image data stream. As a bare minimum, this metadata must include information on which frames 200 include replaceable image content 202 and on the shape, dimensions, and placement of variable content display area 204 within each frame 200. At the least, this type of data gives "raw" information that identifies which pixels of image frame 200 can be replaced in the corresponding image data stream. Alternately, a mask or selection channel specifying the alterable area may be provided. However, as is apparent to those skilled in the visual arts, merely identifying the location of variable content display area 204 itself does not give enough information for believable, visually suitable substitution of alternate replaceable image content 202'. That is, further information on scene visual characteristics such as camera angle, focus distance, brightness conditions, image dimensions, and the like must be taken into account in order to suitably condition the image data to provide a visually acceptable modified image frame 200'. Point of focus information is also helpful for determining the appearance of alternate replaceable image content 202' relative to other components of image frame 200. Moreover, both dimensional and view factor data may easily change, at least in part, from one image frame 200 to the next.

Referring to Table 1, there are shown a few brief, simple examples of metadata that are provided for different image frames 200, with significant metadata fields identified. Key metadata would include the following:
(a) frame id number. As noted above, each frame 200 has a sequentially assigned frame number, beginning with the first frame in the motion picture;
(b) bounding coordinates. These identify vertices 206 of variable content display area 204, as was shown in Fig. 3b, typically in units of pixels, using the familiar Cartesian coordinate model, with some point within or along the edge of frame 200 typically assigned as the home (origin) or (0,0) location;
(c) camera focus setting and camera angle data. These parameters are necessary for conditioning alternate content 208 to obtain the proper view angle and perspective. Failure to provide the proper view angle when obtaining alternate content 208 can often be compensated using image data transforms. For example, information may be included that specifies alteration of an inserted rectangular shape, such as a billboard, so that the final appearance matches the perspective presented by the camera, as is taught in U.S. Patent No. 6,075,542, "A Method of Combining Two Digital Images" (Fredlund et al.), which is incorporated herein by reference;
(d) brightness and contrast data. This data would include information on overall scene lighting conditions, necessary for adapting alternate content 208 to fit into image frame 200 with a natural appearance. The creator of the motion picture may specify limits to brightness, contrast, saturation, or other image parameters that help to lend a natural appearance to the inserted pixels; and,
(e) other descriptive information, as needed. For example, there can be added complexity if scene environmental conditions include reflections, rain, snow, or fog. There may be some required compensation for projection light loss, due to the position of variable content display area 204 within frame 200. Point of focus information may be important for determining image sharpness and other parameters.

The listing of Table 1 is intended to be illustrative only; alternate and/or additional metadata fields could be provided for more precisely defining viewing conditions of the scene. The data format of the metadata could be a simple, open data format, such as employing familiar comma-separated fields, for example. More complex encoding schemes could be used, such as those employing compression, security algorithms wherein a key is required for decoding, or other known mechanisms for data transfer.

The metadata associated with each image frame 200 could be transmitted along with the image data for image frame 200, tagged as unimaged metadata but provided within the image data stream or during the same transmission session used for the image data stream. Alternately, this metadata could be provided on a separate medium or as a file that accompanies transmission of the digital cinema imaging data. Or, a separate channel could be provided for transmission of metadata, at a separate time or synchronized with transmission of the image data itself.

In practice, for any identified variable content display area 204, default content used as replaceable image content 202 is provided by studio 110. Thus, the operator of exhibition system 140 has the option to substitute alternate replaceable image content 202' for replaceable image content 202 or to retain the original replaceable image content 202. In a movie theater environment, for example, there may be situations wherein it may or may not be appropriate or advantageous to provide this substitution, such as based on audience demographics, for example.

It must also be noted that metadata provided for alternate scene content also provides metrics that can be useful to advertisers and to those selling potential advertising space. In assessing the potential value of using replaceable image content 202 for a product placement opportunity, for example, an advertiser can make decisions based on metadata regarding duration, point of focus, and lighting conditions for a specific sequence in the motion picture.

Audience metrics may also be used for more effectively targeting alternate content 208. There may be a number of available candidate images that could serve as alternate content 208, selected based on audience demographics and other audience metrics. For an audience largely consisting of pre-teens, for example, specific alternate content 208 may be advertising material targeted to the interests of a younger audience. For an audience largely consisting of adults, other alternate content 208 may be used instead, targeted to this older group. In this way, demographic data and other audience metrics can be used to determine the content of modified image frame 200' during any one showing.

**Table 1.**

| **Metadata Example** | | | |
|---|---|---|---|
| **Frame # (start,end)** | **Bounding coordinates** | **Scene Characteristics** | **Variable content** |
| 000,423 | (137,144) | Camera focus setting: 16 ft. distance | Description: |
| | (658,147) | Bearing angle: +4.5 degrees. | Milk truck |
| | (661,398) | From normal:-11.23 degrees | placard |
| | (140,387) | Brightness: Sunlight. Level: 88 | Size: 48H x |
| | | Point of focus: Jennifer in sunglasses | 64W in. |
| 23433,23507 | (66, 215) | Camera: Panning, arc from (558,232) 13.2 | Description: |
| | (312, 228) | ft. | Storefront |
| | (301,396) | Bearing angle: +23.8 degrees | display |
| | (80, 378) | From normal: +22.3 degrees | Size: 35H x |
| | | Brightness: Clear dusk. Level: 62 | 116.7W in. |
| | | Point of focus: Jack, pacing anxiously | |
| 6727727, | (2341,816) | Camera focus setting: 46.3 ft. | Description: |
| 6745421 | (2215,145) | Bearing angle: +15.4 degrees | Taxi banner. |
| | ... | From normal: -23 degrees | Size: 12H x |
| | ... | Brightness: Rainy night. Level: 21 | 55W in. |
| | | Point of focus: distant cityscape | |

### Other Options for Replaceable Image Element 202

In the example embodiment shown in Fig. 3a, replaceable image element 202 comprises an advertisement that is part of the background scene content. In the broadest context, however, replaceable image element 202 may comprise any portion of image frame 200. Using the method of the present invention, any background element could be identified as replaceable image element 202, eligible for replacement with the proper metadata provided. Even foreground elements and people could be added.

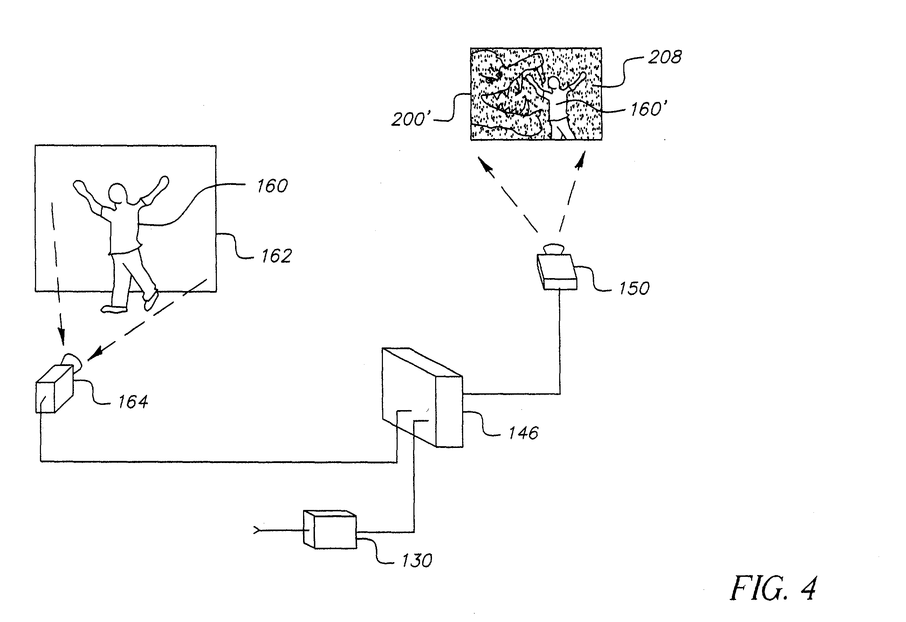

Referring to Fig. 4, there is shown an arrangement of components for obtaining alternate content 208 that allows adding images of people or objects to image frame 200. A subject 160, in front of a blue screen 162, is filmed by an electronic camera 164 and the digital image data thus obtained goes to cinema operating system 146. According to programmed instructions, cinema operating system 146 combines this digital image data with the image data for the digital motion picture, obtained over transmission system 130 as described above. Cinema operating system 146 then sends the digital image data stream to digital projector 150 for displaying modified image frame 200'.

As is well known in television broadcasting, chroma keying or "blue screen" techniques are used for image overlay. Using familiar chroma keying methods, a meteorologist, with an air of authority, points to a background map or moving display; in the television studio, however, the meteorologist actually gestures to an empty blue screen, in hopes that the studio crew, who film the background display separately, properly do their job of combining images and provide the appearance of authenticity.

With the arrangement of Fig. 4, an image 160' of subject 160 can be captured for display within a motion picture. With chroma keying techniques, image 160' is inserted as alternate content 208 within image frame 200. Using chroma keying, cinema operating system 146 determines whether or not it detects a blue pixel from blue screen 162 or a pixel that is part of image 160' and responds accordingly, to dynamically isolate image 160' of subject 160, so that image 160' can be provided as alternate content 208. Using this effect, for example, audience members, filmed before the show, could "appear" in a motion picture in appropriate scenes, such as in crowd scenes, or various types of adventure or comedy scenes, for example. For this purpose, electronica camera 164 and blue screen 162 could be placed in the lobby of a movie theater or other location that is suited for obtaining images 160' of audience members, for example.

Insertion of objects or people into motion picture image frame 200, using the technique shown in Fig. 4, would require different metadata than that used for the substitution example described above with reference to Figs 3a-3d and Table 1. For example, instead of precise description of the geometric attributes of variable content display area 204, a more generalized description of the background and scaling information would be provided, such as using techniques disclosed in commonly assigned U.S. Patent No. 5,867,282 (Fredlund et al.), which is incorporated herein by reference. Some camera angle, focus distance, and brightness data would also be needed. Additional metadata would indicate the overall type of scene and preferred subject type (such as by age or gender), pose or gestures, and other information that helps to fit image 160' most suitably into the scene.

As noted earlier, when suggested by audience demographics, for example, it may be advantageous to select one from a number of available alternate replaceable image content 202' sequences. For advertising content, for example, a first specific sequence of alternate replaceable image content 202' may be best suited to a pre-teen viewing audience whereas a second sequence of alternate replaceable image content 202' may be most appropriate for a group of senior viewers.

### Use of Alternate Sequence of Scene Content

In addition to serving as a basis for selecting alternate content within image frames 200, audience metrics can also serve as a basis for selecting one or more frame sequences, where each frame sequence is the set of sequential frames that provide a scene, or some temporal scene segment, for the motion picture. For example, specific scenes or portions of scenes may be eliminated or abbreviated for an audience of youngsters or, conversely, expanded for a younger audience and shortened for an older audience. The capability to readily substitute different versions of the same scene at the theater, previously too difficult to provide using conventional film display, is possible using digital cinema technology.

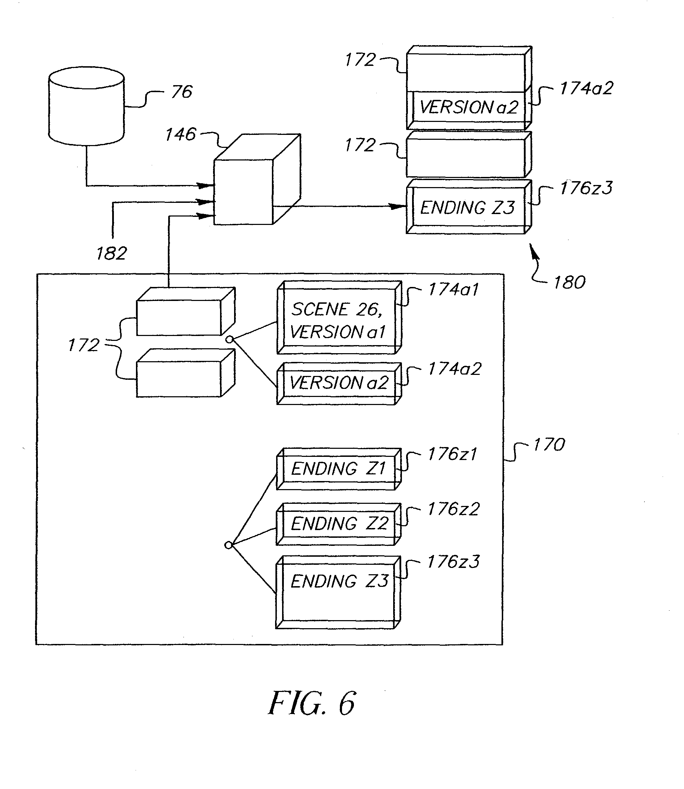

Referring to the schematic block diagram of Fig. 6, there is represented the arrangement of the present invention whereby cinema operating system 146 assembles an image display data stream 180 using portions of alternative scene content that have been selected based on audience demographics from database 76, or based on other factors. For this capability, studio 110 provides a composite movie 170 that comprises a number of image data streams. In the simplified example of Fig. 6, the image data streams are the following:
(a) base content 172, comprising one or more scenes that are not changed from one showing to the next;
(b) selectable scenes 174a1 and 174a2, wherein one and only one of selectable scenes 174a1 or 174a2 is to be included in display image data stream 180; and,
(c) selectable endings 176z1, 176z2, and 176z3, wherein one and only one of selectable endings 176z1, 176z2, and 176z3 is included in display image data stream 180.

In practice, one of selectable scenes 174a1 or 174a2 is a default, provided in the original image data stream of the complete motion picture. Similarly, one of selectable endings 176z1, 176z2, and 176z3 is a default. Thus, where no decision is made based on audience metrics, default original scenes are used in the digital image data stream.

For the arrangement of Fig. 6, studio 110 provides all of the components of composite movie 170. In addition, studio 110 also provides selectable scene metadata 182 that describes each of selectable scenes 174a1 and 174a2 and selectable endings 176z1, 176z2, and 176z3. In a preferred embodiment, selectable scene metadata 182 has the information in Table 2, including scene description, encoded demographics data, timing, and other information. The movie exhibitor can then use selectable scene metadata 182 to determine which scene segments to display, based on audience metrics and other factors. Preferably, cinema operating system 146 is programmed to make a decision, based on audience metrics and related variables. Given this decision, image processing logic on cinema operating system 146 can then be utilized to fit the selected material into image display data stream 180.

Using the arrangement shown in Fig. 6, a movie exhibitor can provide a number of different image display data streams 180 for the same film, based on audience metrics such as audience demographics, attendance numbers, traffic logistics, audience behavior, or on other factors such as time of day, time of season, weather conditions, or popcorn inventory levels. For example, during a busy period, it may be advantageous to show selectable ending 176z1 which may be shorter than selectable ending 176z3. It must also be observed that image display data stream 180 may be assembled dynamically, based on decisions made before or even during a showing. Where demographic database 76 is remotely accessible, image display data stream 180 could be assembled at a remote server by studio 110 or by a film distributor, for example.

The same approach used for specifying selectable scenes 174a1, 174a2 or selectable endings 176z1, 176z2, or 176z3 can also be used for specifying an advertising or promotional trailer or slide show content as part of image display data stream 180. That is, the selectable content can be part of the feature film itself or can be some other component, such as an advertising trailer.

**Table 2.**

| **Scene Metadata 182 Example** | | | | | |
|---|---|---|---|---|---|
| **Seq. ID** | **Scene** | **Selectable Scene Segment** | **Duration (secs.)** | **Rating** | **Demographics Rating** |
| 28 | Night on stormy sea | Shark attack, bloody | 114 | PG | 14000010075 |
| 28 | Night on stormy sea | Shark attack, less bloody | 103 | G | 040000306f3 |
| 28 | Night on stormy sea | Shark attack, suggested | 64 | G | 04000040782 |
| 28 | Night on stormy sea | Shark attack, with graphic chewing | 132 | R | 2400007663a |
| 187 | Sailors talk | Barnacle Bill's tale, graphic | 32 | R | 340000356ea |
| 187 | Sailors talk | Barnacle Bill's tale, mild | 30 | PG | 07000070089 |

### Management of Advertising and Promotional Space Resale

Clearly, the method of the present invention provides a profit-making opportunity for theater owners and other motion picture exhibitors. The sale of advertising space within a current run feature film, conventionally the domain of studio 110 only, can now be of benefit to the motion picture exhibitor. To utilize this new capability, the motion picture film is provided with a content tracking listing, containing information about where alternate content 208 can be used within the film. By way of example, Table 3 shows a content tracking list with a small number of the expected information data fields.

A sequence ID indicates the scene sequence within the film. Other information provides enough data for providing an idea of what type of advertising or promotional space is available, for indicating duration of time available, for listing potential or actual clients for the space, and for stating the cost of the available space per unit of time. Provided with this information, a theater owner, or regional exhibitor, could then solicit local clients, presenting the opportunity for them to provide alternate content 208 for one or more segments in the feature film. The filming of alternate content 208 would typically be provided by an outside agency, given the applicable scene sequence information (as in the example of Table 3) and metadata (as in the example of Table 1).

**Table 3.**

| **Content Tracking Example** | | | | | |
|---|---|---|---|---|---|
| **Seq. ID** | **Scene** | **Object** | **Duration** | **Client** | **Cost/sec** |
| 1 | Daylight | Grocery store sign | 30 secs. | Giant Big Eagle | $300. |
| 33 | Clear dusk | Gas station canopy | 120 secs. | Mak's Sunoilco | $280. |
| 42 | Clear dusk | Diner roof sign | 8 secs. | Joe's Diner | $240. |
| 353 | Night, clear | Car dealership | 12 secs. | Loopy's Studebaker | $280. |

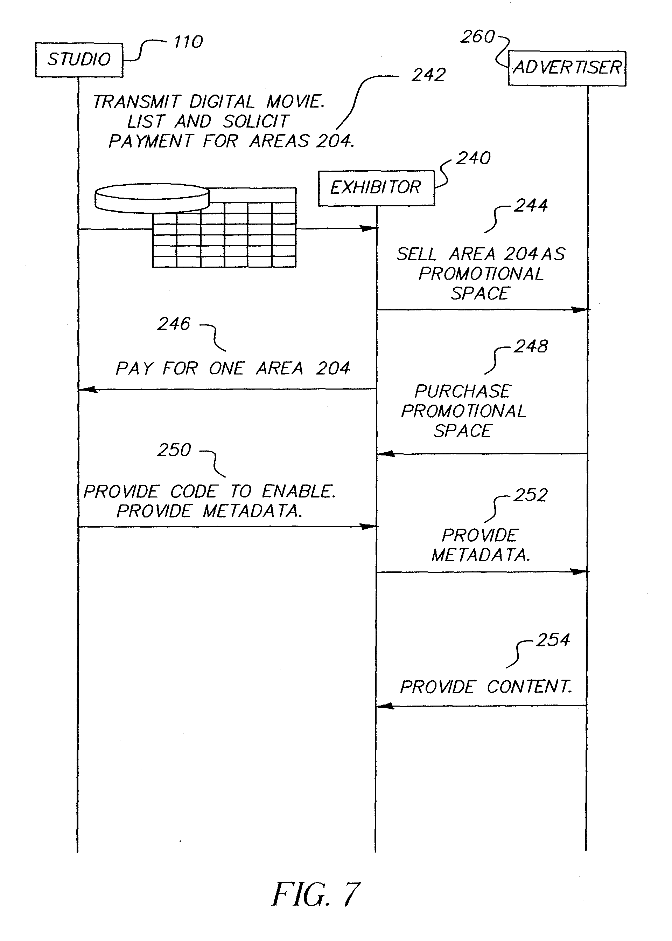

Referring to Fig. 7, there is shown a flow sequence diagram of the steps for obtaining alternate scene content in a preferred embodiment. In an initial transmittal step 242, studio 110 provides, to an exhibitor 240, the digital movie as a digital motion picture image data stream. (In order to simplify the description in relation to Figures 7 through 10, the intermediary role of the post production facility 111 has been omitted from the description.) In addition, studio 110 also provides, as metadata, information on replaceable scene content, whether for variable content display area 204, as shown in the example of Fig. 7, or for complete scenes, as described subsequently. In a sales offering step 244, exhibitor 240 sells the available replaceable scene content to an advertiser 260. Advertiser 260 purchases promotional space in a purchase step 248. Upon the sale to advertiser 260, exhibitor 240 remits payment for use of the space to studio 110 in a purchase step 246. In an enablement step 250, studio 110 provides exhibitor 240 with enablement information for the space, such as a code, for example, and provides any additional metadata needed.

Continuing with the flow sequence of Fig. 7, in a specifications step 252, exhibitor 240 provides metadata information to advertiser 260. Advertiser 260 then has the promotional image content prepared. In a content providing step 254, advertiser 260 then provides content suitably prepared for use within the digital motion picture image data stream. Exhibitor 240 then integrates the substitute content, whether it serves within frames 200 as alternate content 208 or serves as a complete sequence of frames for alternative scene content, as described subsequently.

The transaction sequence of Fig. 7 permits any number of modifications within the scope of the present invention. For example, studio 110 may simply provide metadata and any necessary decoding information as part of its sale, lease, or distribution of the motion picture film. Or, exhibitor 240 may be required to pay a use fee for presentation of any locally sold promotional content. Studio 110 may provide digital motion picture content, metadata, enabling decryption codes, and any other data from a networked server or using any other suitable data transport medium, such as optical disks or magnetic tape media, for example.

Exhibitor 240 may make any number of different possible arrangements with advertisers 260. In particular, audience metric data may be used to determine what, if any, alternate scene content is used. For example, advertiser 260 may insist that specific promotional content be integrated into the motion picture digital image data stream only if the audience has at least 200 males between ages 16 and 44. Billing arrangements can be negotiated that adjust the pricing of added promotional content based on audience metrics such as size or demographics. Advertisers 260 may bid for the same scene sequence, so that different promotional content is seen at different showings, including the possibility of determining which promotional content to show based on audience metrics. The same data network used for transmitting the motion picture, or some other network connection could be employed as a backchannel for providing payment authorization or audience metric data back to studio 110 or to advertiser 260. In its broadest sense, advertiser 260 could be a company that manufactures a product for sale or provides some service, an individual, an organization, or any agency or representative commissioned to provide promotional exposure in return for a payment of some kind.

As yet another option using audience metrics, a graduated scale could be applied, so that the cost to advertiser 260 is based on the number of people in the audience who meet certain demographic criteria. Thus, for example, if a target audience is female, aged 16 to 35, the fee to advertiser 260 for promotional content may be varied depending on the number of audience members meeting these criteria.

### Alternative Embodiments

Using the method of the present invention, the actual rendering of the digital motion picture display data, with insertion of alternate content 208 and any accompanying audio content, may be performed dynamically, in "real time" as the motion picture is displayed. Alternately, rendering can be performed beforehand and the rendered version temporarily stored for later viewing, such as on disk array 120, as was shown in Fig. 2.

It must be noted that studio 110 may designate any number of frame 200 sequences that can accept alternate content 208. Exhibitor 240 or the theater owner may have the option of modifying any or none of these frame 200 sequences. Encoding can allow studio 110 to enable or disable this modification of frame 200 content, based on receiving some payment from the owner or operator of exhibition system 140.

For any variable content display area 204, the exhibitor or theater owner may have the option of selecting from among a set of possible candidates for alternate content 208. Thus, for example, different advertisers might have their promotional material appear differently at different showings. Advertiser 260 may use alternative scene content to promote the same product differently, depending on audience metrics, such as emphasizing either nutritious aspects of a breakfast cereal (where viewer age may be 50 or higher, for example) or fun, sugary aspects of the same breakfast cereal (where audience metrics show a younger viewer age) as was described in the background section above.

A default image may be provided as alternate scene content 208, to be used where exhibitor 240 does not sell one or more variable content display areas 204.

### Transaction Flow for Selectable Content

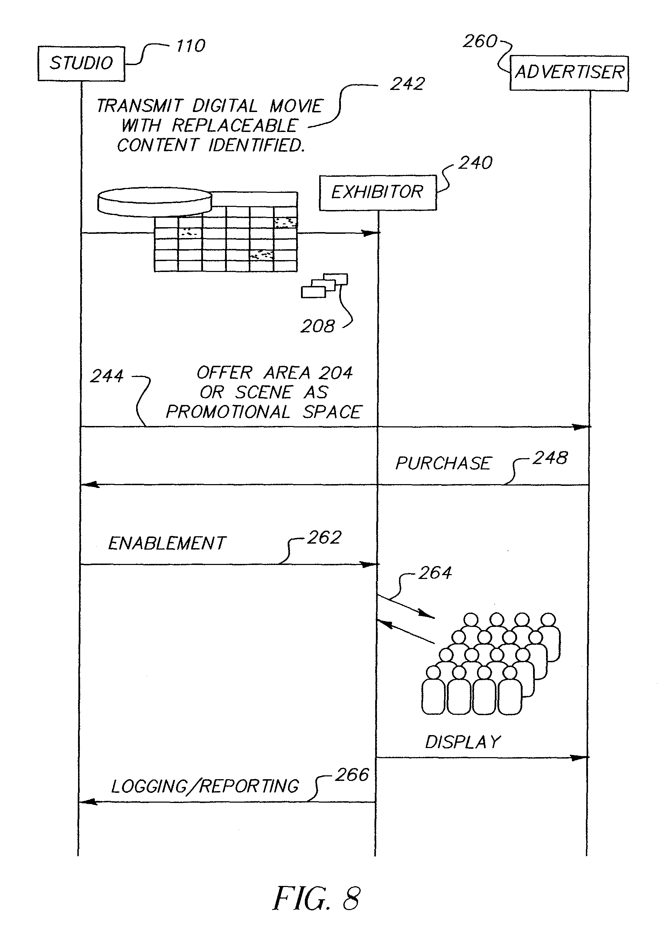

Referring to Fig. 8, there is shown a flow sequence diagram for using alternate scene content 208 as a revenue generator in an embodiment in which exhibitor 240 plays a more passive role than with the sequence of Fig. 8. In initial transmittal step 242, studio 110 provides the digital movie to exhibitor 240, with alternate content for variable content display area 204 or for complete scenes. In sales offering step 244, studio 110 offers advertisers 260 the opportunity to purchase alternate scene content 208, to be displayed according to audience metrics at one or more showings of the motion picture. Alternate scene content 208 can be prepared by studio 110 or by advertiser 260, based on metadata provided by studio 110. Advertiser 260 purchases promotional space in a purchase step 248. Then, in an enablement step 262, studio 110 provides exhibitor 240 with enablement codes for decoding and use of the alternate content that has been provided for display, as purchased by advertiser 260. At the time of showing, exhibitor 240 obtains audience metrics in a metrics collection step 264. Then, based on suitable audience metrics, alternate scene content 208 is displayed. This display action is logged and reported to studio 110 in a reporting step 266.

The arrangement of Fig. 8 allows for a number of alternative schemes for display of alternate scene content 208, such as the following:
(a) In an individual showing, the decision to display any specific one of a set of promotional scenes or to include specific frame 200 content can be based on the audience metrics obtained. Thus, for example, where a particular movie holds special interest to a targeted age group, alternate scene content 208 targeted to this group would be displayed. The decision to show one or another optional trailers at any one time, for example, or to simply display default content would depend on the audience metrics collected at the time of the showing;
(b) Billing rates can be adjusted based on audience metrics. Thus, for example, exhibitor 240 may be able to charge premium rates for display of alternate scene content 208 when an audience is determined to have at least some threshold number of members of a targeted demographic group; conversely, where audience metrics show that there are few members of a targeted demographic group at a particular showing, promotional rates might be lowered accordingly;
(c) Alternate scene content 208 from different sources, such as from different advertisers 260, could be available for each showing of the motion picture, where the decision to show promotional content A or promotional content B can be made as the audience is being seated;
(d) A network connection may be used as a "backchannel" for reporting audience metrics or for any of the transactional steps noted in Fig. 8. In particular, purchase step 248 or enablement step 262 could employ a network connection advantageously, allowing differences in scene content and pricing from one showing to the next based, for example, on audience metrics.

It can be appreciated that the capability to substitute scene content targeted to the characteristics of the audience has advantages for advertisers 260, who can show improved effectiveness of advertising to specific markets. Likewise, exhibitors 240 and studio 110 benefit by being able to show more effective use of promotional space to advertisers 260.

Still referring to Fig. 8, metrics collection step 264 can be carried out in a number of ways, using techniques ranging from manual counting and reporting to using sophisticated pattern recognition equipment for automatically obtaining data about audience composition.

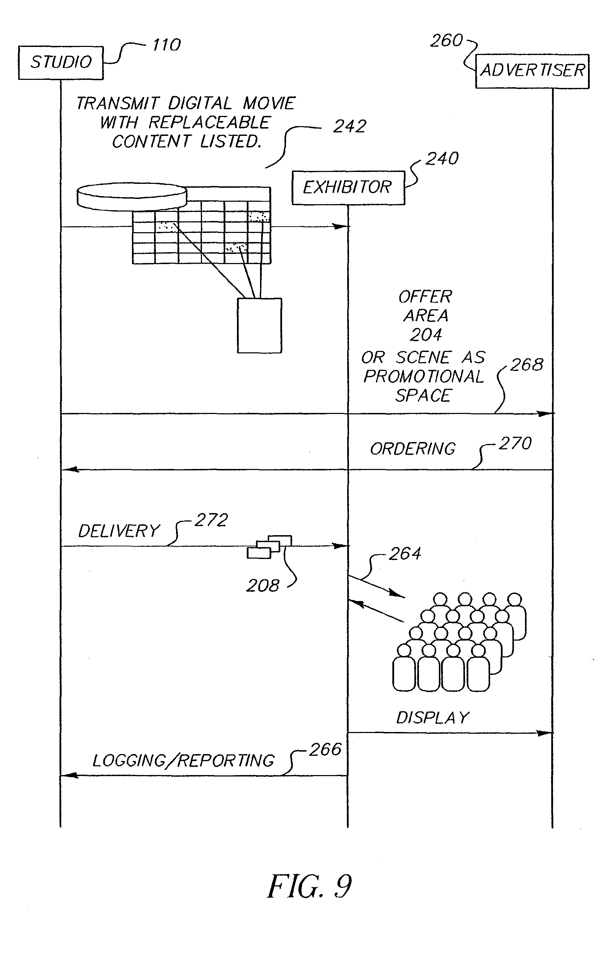

Referring to Fig. 9, there is shown a flow sequence diagram for using alternate scene content 208 as a revenue generator in another embodiment. In initial transmittal step 242, studio 110 provides the digital movie to exhibitor 240 and provides a listing of alternate content, prepared by studio 110, that is available, either for variable content display area 204 in one or more frame 200 sequences or for complete scenes, whether video content, audio content, or both. Default content is provided; however, alternate content can be substituted if purchased. In this way, local or regional advertisers can purchase alternate content that is studio-prepared, for presentation to an audience having a predetermined demographic make-up. In a negotiation step 268, exhibitor 240, or agents commissioned by exhibitor 240 or studio 110, negotiate sales of alternate content with advertisers 260, to be displayed according to audience metrics at one or more showings of the motion picture. In an ordering step 270, advertiser 260 purchases the alternate content based on the negotiated sales. In a delivery step 272, studio 110 provides the alternate content that has been ordered, along with any required enablement data, such as decoding keys or metadata. At the time of showing, exhibitor 240 obtains audience metrics in metrics collection step 264. Then, based on suitable audience metrics, the purchased alternate scene content 208 is displayed. This display action is logged and reported to studio 110 in a reporting step 266.

### Alternative Audio Content

It must be emphasized that alternate content 208 may comprise either video or audio content, or both. Where alternate content 208 is video content only, the original soundtrack would be used; where alternate content 208 is audio content only, the original video frames would be used. A third alternative, where alternate content 208 has both video and audio content, would overwrite existing content or mix audio from alternate content 208 with existing content. While the description given above is primarily directed to using alternate visual content, the transactions shown in the diagrams of Figs. 7, 8, and 9 could be used for alternate scene content that is either audio or video or both.

Among alternatives when using the method of the present invention are transactions for incorporating audio content as part of alternate content 208. Sound track data can be substituted for, or mixed in with, portions of the motion picture soundtrack data to coordinate with any sequence of modified image frames 200'. Audio content can be substituted for existing audio content or selectively inserted into the motion picture as one or more audio clips. An advertising jingle, for example, might be overheard in the background of a movie scene. Alternately, different soundtrack content 208 can be used, selected based on audience metrics. For selected movies, for example, this could even provide an opportunity for alternate soundtracks, selected based on audience metrics.

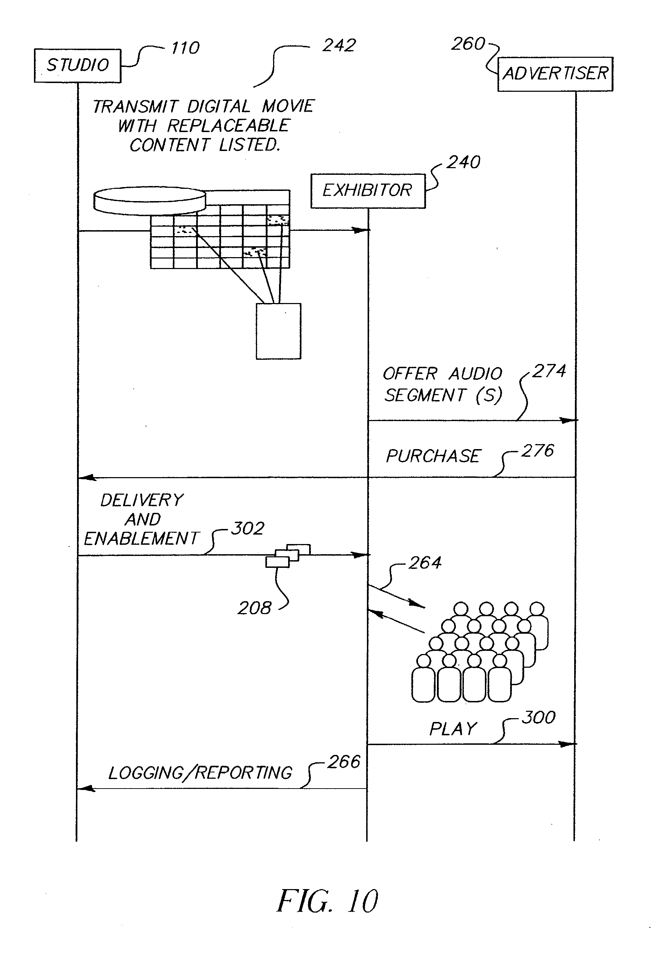

Referring to Fig. 10, there is shown a flow sequence diagram of the steps for obtaining audio content as alternate content 208, for selecting specific audio content based on audience metrics, and for obtaining revenue from this activity. In initial transmittal step 242, studio 110 provides, to exhibitor 240, the digital movie as a digital motion picture image data stream. In addition, studio 110 also provides, as metadata, information on audio content where replacement or mixing is allowed. In sales offering step 274, exhibitor 240 sells the promotional space available replaceable scene content to advertiser 260. Advertiser 260 purchases promotional space for an audio clip in a purchase step 276. In a delivery and enablement step 302, studio 110 provides exhibitor 240 with enablement information for the audio clip, such as a code, for example, and provides any additional metadata needed. The audio content itself is typically provided by advertiser 260, although studio 110 may offer alternative audio content for local or regional purchase.

Continuing with the flow sequence of Fig. 10, exhibitor 240 obtains audience metrics in data collection step 264. Based on audience metrics obtained, exhibitor 240 selects which one of a possible set of alternate audio clips is to be played at a specific showing in a play step 300. Exhibitor 240 then inserts the selected audio clip during a showing. This activity is logged and reported to studio 110 in a reporting step 266.

The transaction sequence of Fig. 10 permits any number of modifications within the scope of the present invention. For example, studio 110 may simply provide metadata and any necessary encoding information suitable for audio insertion as alternate content 208 as part of its sale, lease, or distribution of the motion picture film. Or, exhibitor 240 may be required to pay a use fee for presentation of any locally sold promotional content. Additional billing arrangements can be negotiated that adjust the pricing of added promotional content based on audience metrics such as size or age demographics. Advertisers 260 may include musicians purchasing promotional space, for example. Studio 110 or exhibitor 240 may provide existing audio content to advertisers 260 to allow mixing with additional content.

In addition to affecting the composition of image display data stream 180, audience demographic data or related audience metrics could also be used as a basis for selecting advertising or promotional content on displays placed in a lobby or other area outside the theater.

## Claims

1. A method for displaying a motion picture received as a digital data stream having a plurality of original scene sequences and further having selectable scene content in one or more of the original scene sequences, said method comprising the steps of:
(a) obtaining data about an audience for a plurality of audience members at a showing of the motion picture;
(b) receiving digital image data for an alternate sequence of scene content for one of the original scene sequences in the motion picture; and
(c) dependent upon said data about said audience, substituting said alternate sequence of scene content into the digital data stream for said one of the original scene sequences at said showing, thereby altering selectable scene content for display according to said data about said audience; and
(d) obtaining a fee for displaying said alternate sequence of scene content.

2. A method for displaying a motion picture according to claim 1 wherein the step (a) of obtaining data about said audience comprises the step of obtaining input data from entries on a computer console.

3. A method for displaying a motion picture according to claim 2 wherein at least one audience member enters said input data on said computer console.

4. A method for displaying a motion picture according to claim 1 wherein the step (a) of obtaining data about said audience comprises the step of obtaining input from an electronic camera.

5. A method for displaying a motion picture according to claim 1 wherein the step (a) of obtaining data about said audience comprises the step of identifying an age range of at least one audience member.

6. A method for displaying a motion picture according to claim 1 wherein the step (a) of obtaining data about said audience comprises the step of identifying the gender of at least one audience member.

7. A method for displaying a motion picture according to claim 1 wherein the step (d) of obtaining a fee comprises the step of disclosing said data about said audience.

8. A method for displaying a motion picture according to claim 1 wherein the step (b) of receiving digital image data comprises the step of receiving data over a wireless transmission network.

9. A method for displaying a motion picture according to claim 1 wherein the step (b) of receiving digital image data comprises the step of receiving data on an optical medium.

10. A method for displaying a motion picture according to claim 1 wherein the step (b) of receiving digital image data comprises the step of receiving data on a magnetic medium.

11. A method for displaying a motion picture according to claim 1 wherein said alternate sequence of scene content received in step (b) comprises a series of complete image frames.

12. A method for displaying a motion picture according to claim 1 wherein said alternate sequence of scene content received in step (b) comprises image content for insertion into image frames provided in the motion picture.

13. A method for displaying a motion picture according to claim 1 wherein said alternate sequence of scene content received in step (b) comprises a slide show image.

14. A method for displaying a motion picture according to claim 1 wherein the step (c) of substituting said alternate sequence of scene content into said motion picture digital data stream comprises the step of conditioning said digital image data for said alternate sequence of scene content to the scene characteristics of one or more successive frames.

15. A method for displaying a motion picture according to claim 1 further comprising the steps of:
(a) providing insertable audio content corresponding to said alternate sequence of scene content; and
(b) inserting said insertable audio content into an audio data stream correlated with said motion picture digital data stream.

16. A method for displaying a motion picture image according to claim 1 wherein the step (b) of receiving said alternate sequence of scene content comprises the step of receiving data obtained using chroma key techniques.

17. A method for displaying a motion picture image according to claim 1 wherein said data about said audience obtained in step (a) is a factor in setting the amount of said fee.

18. A method for displaying a motion picture image according to claim 17 wherein said data about said audience obtained in step (a) is a factor in selecting a specific said alternate sequence of scene content from a specific advertiser.

19. A method for displaying a motion picture image according to claim 1 wherein the step (c) of substituting said alternate sequence of scene content is enabled with the further step of employing a decryption key.
